# EUROPEAN PATENT APPLICATION

(11) **EP 4 703 192 A1**
(43) Date of publication of application: **04.03.2026**
(21) Application number: 25193129.1
(22) Date of filing: 31.07.2025
(51) Int. Cl.: B60L 58/26, H01M 10/613, H01M 10/625, H01M 10/6556, H01M 10/6568

(54) **COOLING SYSTEM FOR BATTERY MODULE**

(30) Priority: 02.09.2024 KR 20240118781
(71) Applicant: SK Innovation Co., Ltd., Seoul 03188 (KR); SK Enmove Co., Ltd., Seoul 03188 (KR)
(72) Inventor: PARK, Min Je, 34124 Daejeon (KR)
(74) Representative: Prüfer & Partner mbB Patentanwälte · Rechtsanwälte

(57) **Abstract**

Proposed is a battery module cooling system including an inlet into which cooling fluid is introduced, a first parallel system configured by connecting n battery modules in parallel to which the cooling fluid introduced from the inlet is supplied, a second parallel system configured by connecting *m* battery modules in parallel, with *m* being a number less than *n,* to which the cooling fluid flowing out from the first parallel system is supplied, a third parallel system composed of a single battery module, with *m* being a number more than 1, or configured by connecting s battery modules in parallel, with s being a number less than *m,* to which the cooling fluid flowing out from the second parallel system is supplied, and an outlet through which the cooling fluid that has passed through the third parallel system flows out.

## Description

### BACKGROUND OF THE INVENTION

### Field of the Invention

The present disclosure relates to a battery module cooling system.

### Description of the Related Art

In recent years, as mobile devices such as mobile phones and laptops have become smaller and lighter, and electric vehicles and hybrid vehicles demand high-capacity power sources, a variety of batteries have been developed and used.

In the case of secondary batteries, efficiency is becoming increasingly important depending on the application field, but problems, such as heat generation and fires during charging or operation, occur due to external factors.

Accordingly, technologies are being developed to increase the operating efficiency of secondary batteries and ensure safety.

Moreover, a recent increase in electricity usage has led to increased carbon emissions and exacerbated global warming concerns, which has led to a demand for more efficient device operation mechanisms and maximizing cooling efficiency.

### Document of Related Art

(Patent Document 1) KR 10-0221057 B1

### SUMMARY OF THE INVENTION

According to an aspect of the present disclosure, a battery module cooling system is provided, which is effective to increase the cooling efficiency of battery modules and improve the efficiency of cooling fluid use by controlling the flow rate and speed (velocity) of a cooling fluid circulated to cool the battery modules.

The present disclosure provides a battery module cooling system according to claim 1. Embodiments battery module cooling system according to the present disclosure are set forth in subclaims. The present disclosure also provides a method for controlling a circulation path and a circulation flow rate flowing through a plurality of battery modules comprised in a battery module cooling system according to claim 11.

A battery module cooling system according to an aspect of the present disclosure may include: an inlet into which a cooling fluid is introduced; a first parallel system configured by fluidly connecting n battery modules in parallel to which the cooling fluid introduced from the inlet is supplied; a second parallel system configured by fluidly connecting *m* battery modules in parallel, with *m* being a number less than *n,* to which the cooling fluid flowing out from the first parallel system is supplied; a third parallel system (i) having a single battery module, with *m* being a number more than 1, or (ii) configured by fluidly connecting s battery modules in parallel, with s being a number less than *m,* to which the cooling fluid flowing out from the second parallel system is supplied; and an outlet through which the cooling fluid that has passed through the third parallel system flows out.

In this case, the cooling fluid may be supplied evenly to each of n battery modules of the first parallel system, and the cooling fluid that has passed the first parallel system may be supplied evenly to each of *m* battery modules of the second parallel system, and then the cooling fluid that has passed the second parallel system may be supplied to the single battery module or supplied evenly to each of s battery modules of the third parallel system.

In some embodiments, a total flow rate of cooling fluid passing through *n* battery modules of the first parallel system, a total flow rate of cooling fluid passing through *m* battery modules of the second parallel system, and a total flow rate of cooling fluid passing through the single battery module or s battery modules of the third parallel system may be all the same.

In some embodiments, a flow rate of a cooling fluid passing through at least one or each of *m* battery modules of the second parallel system may be 2 to 3 times greater than a flow rate of a cooling fluid passing through at least one or each of n battery modules of the first parallel system.

In some embodiments, a flow rate of a cooling fluid passing through the single battery module or at least one or each of s battery modules of the third parallel system may be 2 to 3 times greater than a flow rate of a cooling fluid passing through at least one or each of *m* battery modules of the second parallel system.

In embodiments, a velocity of a cooling fluid passing through at least one or each of *m* battery modules of the second parallel system may be 2 to 3 times greater than a velocity of a cooling fluid passing through at least one or each of n battery modules of the first parallel system.

In embodiments, a velocity of a cooling fluid passing through the single battery module or at least one or each of s battery modules of the third parallel system may be 2 to 3 times greater than a velocity of a cooling fluid passing through at least one or each of *m* battery modules of the second parallel system.

In embodiments, in the case that a temperature of the cooling fluid flowing into the first parallel system from the inlet is referred to as a first temperature, a temperature of the cooling fluid flowing out of the first parallel system and flowing into the second parallel system is referred to as a second temperature, and a temperature of the cooling fluid flowing out of the second parallel system and flowing into the third parallel system is referred to as a third temperature, the second temperature may be higher than the first temperature, and the third temperature may be higher than the second temperature, wherein a difference in a flow rate of cooling fluid flowing into each of the n battery modules of the first parallel system and a flow rate of cooling fluid flowing into each of the m battery modules of the second parallel system may be adjusted in proportion to a difference between the first temperature and the second temperature, and a difference between a flow rate of cooling fluid flowing into each of the m battery modules of the second parallel system and a flow rate of cooling fluid flowing into the single battery module or each of the s battery modules of the third parallel system may be adjusted in proportion to a difference between the second temperature and the third temperature.

In some embodiments, n, the number of battery modules of the first parallel system, may be at least twice *m,* the number of battery modules of the second parallel system, and *m,* the number of battery modules of the second parallel system, may be at least two with respect to the single battery module of the third parallel system or at least twice s, the number of battery modules connected in parallel of the third parallel system.

In a further aspect of the present disclosure, a vehicle is provided which comprises a battery module cooling system according to the present disclosure, wherein the vehicle is an electric vehicle or a hybrid vehicle.

In a further aspect of the present disclosure, a method is provided for controlling a circulation path and a circulation flow rate flowing through a plurality of battery modules comprised in a battery module cooling system, wherein the battery modules in the battery module cooling system are arranged in parallel systems, with each parallel system comprising the at least one battery module or a plurality of battery modules respectively arranged in each parallel system are fluidly connected in parallel, and wherein the number of battery modules decreases from an upstream parallel system to a subsequent downstream parallel system with respect to the direction of a cooling fluid flow from an inlet of the battery module cooling system to an outlet of the battery module cooling system.

In an exemplary embodiment of the method according to this aspect of the present disclosure, the method may control the flow rate of the cooling fluid to pass through each of the battery modules of the subsequent downstream parallel system in accordance with one or more of the following conditions:
(a) in accordance with the number of parallel systems through which the cooling fluid circulates and cools;
(b) in accordance with the number of the plurality of battery modules present in the upstream parallel system; and/or
(c) in accordance with a temperature increase of the cooling fluid caused by passing through the respective upstream parallel system.

In an exemplary embodiment of the method of the present disclosure, the flow rate of the cooling fluid passing through the at least one of battery modules of the downstream parallel system is set 2 to 3 times greater than the flow rate of the cooling fluid passing through the at least one of battery modules of the respectively upstream parallel system.

In an exemplary embodiment of the method of the present disclosure, the method further comprises controlling the cooling fluid to be supplied evenly to each of the downstream parallel systems .

In an exemplary embodiment of the present disclosure, the method controls the circulation path and the circulation flow rate of the battery module cooling system, or for controlling the battery module cooling system in a vehicle, as respectively disclosed herein.

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, by appropriately controlling the circulation path and circulation flow rate of a cooling fluid flowing through battery modules, cooling efficiency with the cooling fluid can be maximized.

Furthermore, by maximizing the cooling efficiency for battery modules, energy efficiency can be increased and power usage can be reduced when cooling battery modules, thereby reducing carbon emissions that come from the operation of related devices.

Furthermore, with a cooling system that can be applied to various structures in which a plurality of battery modules are combined, it is possible to increase the freedom in designing the combined structure of battery modules and the cooling system.

### BRIEF DESCRIPTION OF THE DRAWINGS

FIG. 1 is a view showing the circulation structure of a battery module cooling system according to an embodiment of the present disclosure.
FIG. 2 is a schematic view of a plurality of battery modules combined with the battery module cooling system of FIG. 1 in n exemplified arrangement structure to suit an applied device or system.

### DETAILED DESCRIPTION OF THE INVENTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "comprise", "may comprise", "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Hereinafter, an embodiment of the present disclosure will be described in detail with reference to the attached drawings.

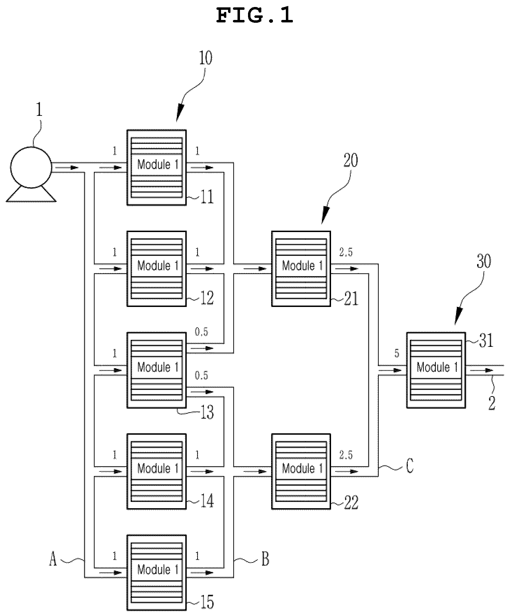

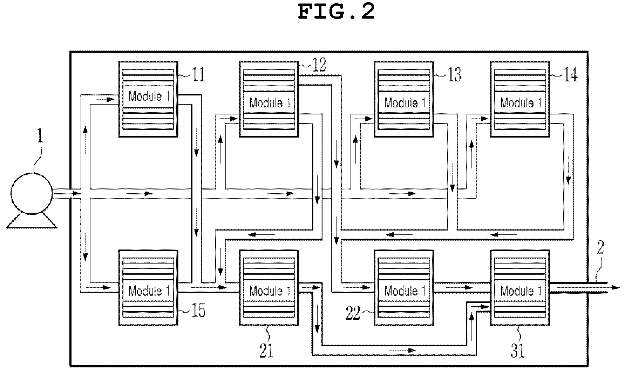

FIG. 1 is a view showing the circulation structure of a battery module cooling system according to an embodiment of the present disclosure, and FIG. 2 is a schematic view of a plurality of battery modules combined with the cooling system of FIG. 1in an exemplified arrangement structure.

A battery module cooling system according to an embodiment of the present disclosure may include: an inlet 1 into which cooling fluid is introduced; a first parallel system 10 configured by fluidly connecting *n* battery modules in parallel to which the cooling fluid introduced from the inlet 1 is supplied; a second parallel system 20 configured by fluidly connecting *m* battery modules in parallel, with *m* being a number less than *n*, to which the cooling fluid flowing out from the first parallel system 10 is supplied; a third parallel system 30 composed of a single battery module as shown in FIG. 1, or configured by fluidly connecting (plural) s battery modules in parallel (not shown), with s being a number less than *m,* to which the cooling fluid flowing out from the second parallel system 20 is supplied; and an outlet 2 through which the cooling fluid that has passed through the third parallel system 30 flows out.

The inlet 1 serves to supply cooling fluid to cool battery modules. Although a single inlet 1 is shown in the drawing, the number or arrangement of the inlets 1 is not limited thereto.

That is, as shown in FIG. 1, the first parallel system 10 may be composed of a first battery module 11 to a fifth battery module 15, the second parallel system 20 may be composed of a sixth battery module 21 and a seventh battery module 22, and the third parallel system 30 may be composed of a single eighth battery module 31.

The configuration in FIG. 1 is only an example, and the number and arrangement of battery modules included in each parallel system may be freely designed and changed within the scope of the technical idea according to one embodiment of the present disclosure.

The first parallel system 10 may have a form in which a plurality of battery modules are connected in parallel. This system is initially supplied with cooling fluid flowing in from the inlet 1 to cool the battery modules.

As shown in FIG. 1, the first parallel system 10 represents an example in which three or more battery modules, that is, *n* battery modules, are connected in parallel.

To be specific, the first battery module 11, the second battery module 12, the third battery module 13, the fourth battery module 14, and the fifth battery module 15 are connected in parallel, and the cooling fluid flowing in from the inlet 1 may be supplied to each battery module through a first supply pipe A.

After the cooling of the first parallel system 10 is completed, the discharged cooling fluid may be supplied to the second parallel system 20 through a second supply pipe B. According to the exemplary embodiment as shown in Fig. 1, the second supply pipe B comprises a first (upper in Fig. 1) supply pipe to supply the discharged cooling fluid of the first and second battery modules 11 and 12 and a part of the discharged cooling fluid of the third battery module 13 to the sixth battery module 21 of the second parallel system 20. Further, the second supply pipe B comprises another second (lower in Fig. 1) supply pipe to supply the discharged cooling fluid of the fourth and fifth battery modules 14 and 15 and a part of the discharged cooling fluid of the third battery module 13 to the seventh battery module 22 of the second parallel system 20. Specifically, as indicated by the numbers at the respective inlets and/or outlets of the respective battery modules 11, 12, 13, 14, 15, 21, 22, 31, the cooling fluid discharged from the third battery module 13 is evenly distributed to supply half of the cooling fluid to the sixth battery module 21 and half of the cooling fluid to the seventh battery module 22. The second parallel system 20 may be configured by connecting *m* battery modules in parallel, with *m* being less than *n* battery modules of the first parallel system 10.

Here, the numerical values indicated on each of the supply pipes (A, B, C) for each battery module in FIG. 1-namely 0.5, 1.0, 2.5, and 5.0-are provided by way of example to represent relative values or ratios of the flow rate of the cooling fluid flowing through the respective pipes, and are not intended to limit the present disclosure to any specific numerical values.

The cooling fluid that has passed through the second parallel system 20 is supplied to the third parallel system 30 through a third supply pipe C. At this time, the third parallel system 30 is composed of the single eighth battery module 31 in an exemplary embodiment shown in Fig. 1, but may be, in alternative embodiments, configured by connecting s battery modules in parallel, with s being optionally more than 1, but less than *m* battery modules of the second parallel system 20.

The cooling fluid that has passed through the third parallel system 30 flows out to the outside through the outlet 2.

Although in an embodiment of the present disclosure, the battery module cooling system is shown as consisting of a three-stage parallel system of the first parallel system 10, the second parallel system 20, and the third parallel system 30, the number or arrangement of these stages may be appropriately changed or adjusted in consideration of the number of battery modules, cooling efficiency, etc.

In addition, it is assumed that the battery modules included in the first parallel system 10, the second parallel system 20, and the third parallel system 30 are all battery modules with the same specifications, and the size and length of a flow path of the cooling fluid passing through the interior of each battery module are also assumed to be the same. However, within the scope reflecting the technical idea of the present disclosure, the size, number, etc., of the flow path of the cooling fluid formed inside the battery module may be appropriately changed.

The cooling fluid is supplied evenly to each of *n* battery modules of the first parallel system 10, and the cooling fluid that has passed the first parallel system 10 may be supplied evenly to each of *m* battery modules of the second parallel system 20, and then the cooling fluid that has passed the second parallel system 20 may be supplied to the single battery module or may be supplied evenly to each of s battery modules of the third parallel system 30.

In addition, in this case, it is assumed that the total flow rate of cooling fluid passing through n battery modules of the first parallel system 10, the total flow rate of cooling fluid passing through *m* battery modules of the second parallel system 20, and the total flow rate of cooling fluid passing through the single battery module or s battery modules of the third parallel system 30 are all the same.

That is, the total flow rate of the cooling fluid flowing in from the inlet 1 is sequentially supplied to the first parallel system 10, the second parallel system 20, and the third parallel system 30, and the flow rate and velocity of the cooling fluid passing through each battery module may be controlled depending on the number of battery modules in each parallel system.

As shown in FIG. 1, the inlet 1 may supply an equal amount of cooling fluid to each of *n* battery modules of the first parallel system 10 through the first supply pipe A.

At this time, when the same flow rate is supplied to each battery module, an internal cooling channel may be formed so that the velocity of the cooling fluid is also maintained the same.

The cooling fluid that has passed the first parallel system 10 is supplied to the second parallel system 20, which is the next stage. Since the second parallel system 20 is composed of *m* battery modules, which are less than n battery modules of the first parallel system 10, the flow rate of the cooling fluid flowing into each battery module of the second parallel system 20 may be greater than the flow rate of the cooling fluid flowing into each battery module of the first parallel system 10.

In particular, cooling efficiency may be improved by supplying the cooling fluid, whose temperature has increased while passing through the first parallel system 10, to each battery module of the second parallel system 20 at a flow rate greater than the flow rate applied to the battery modules of the first parallel system (10).

In a similar manner, the cooling fluid flowing through the second parallel system 20 may be supplied to the third parallel system 30. Since the third parallel system 30 is composed of the single battery module or s battery modules, which are less than *m* battery modules of the second parallel system 20, the flow rate of the cooling fluid flowing into the individual battery modules of the third parallel system 30 may be greater than the flow rate of the cooling fluid flowing into the individual battery modules of the second parallel system 20.

As the cooling fluid, whose temperature has increased by passing through the second parallel system 20, is supplied to the individual battery modules of the third parallel system 30 at a flow rate greater than the flow rate of the cooling fluid supplied to the individual battery modules of the second parallel system 20, the cooling efficiency of the cooling fluid may be further maximized.

To be specific, the flow rate of the cooling fluid passing through one of *m* battery modules of the second parallel system 20 may be 2 to 3 times greater than the flow rate of the cooling fluid passing through one of *n* battery modules of the first parallel system 10.

In addition, the flow rate of the cooling fluid passing through the single battery module or at least one of s battery modules of the third parallel system 30 may be 2 to 3 times greater than the flow rate of the cooling fluid passing through at least one of *m* battery modules of the second parallel system 20.

By controlling the flow rate of the cooling fluid passing through each of the battery modules, the battery modules may be cooled to maintain the appropriate temperature that should be maintained, and the cooling fluid, whose temperature has increased by passing through the first parallel system 10, may also efficiently cool each battery module of the second parallel system 20. In addition, the cooling fluid, whose temperature has increased by passing through the second parallel system 20 may effectively maintain the cooling of each battery module when passing through the third parallel system 30. However, the difference in the flow rate of the cooling fluid may be appropriately changed and adjusted depending on the number of battery modules or the number of parallel system stages.

In conclusion, by ensuring that the cooling fluid passing through the first parallel system 10, the second parallel system 20, and the third parallel system 30 maintains the cooling efficiency thereof for the battery modules until the cooling fluid passes through the last third parallel system 30, the entire battery module cooling system may be operated stably.

In addition, the specifications, such as the size and length of the cooling channel formed inside the battery module and through which the cooling fluid passes, may be applied equally to all battery modules in the cooling system, so that by controlling the flow rate of the cooling fluid passing through the cooling channel, the velocity of the cooling fluid passing through the cooling channel may also be controlled.

To be specific, assuming that the diameters of the cooling channels installed inside all respective battery modules within the battery module cooling system are designed to be the same, the velocity of the cooling fluid passing through at least one of *m* battery modules of the second parallel system 20 may be designed to flow 2 to 3 times greater than the velocity of the cooling fluid passing through at least one of *n* battery modules of the first parallel system 10.

Similarly, the cooling fluid passing through the single battery module or at least one of s battery modules of the third parallel system 30 may be set to flow at a velocity that is 2 to 3 times greater than the velocity of the cooling fluid passing through at least one of *m* battery modules of the second parallel system 20, so that the cooling fluid, whose temperature has increased by passing through each parallel system, may maintain and maximize cooling efficiency when cooling the battery modules in the subsequent stages.

It is appropriate to design the number of battery modules included in the first parallel system 10, the second parallel system 20, and the third parallel system 30 to gradually decrease the number of battery modules of the subsequent parallel system with respect toa previous stage passed.

To be specific, *n*, the number of battery modules of the first parallel system 10, may be at least twice *m,* the number of battery modules of the second parallel system 20, and *m,* the number of battery modules of the second parallel system 20, may be at least two with respect to the single battery module 31 of the third parallel system 30 or at least twice s, the number of battery modules connected in parallel of the third parallel system 30. By doing so, the cooling efficiency of the cooling fluid for the battery modules may be further enhanced by making the flow rate or velocity of the cooling fluid flowing in each parallel system different.

The relative difference in the number of battery modules between parallel systems and the flow rate of the cooling fluid may be controlled depending on the degree of temperature increase after the cooling fluid performs cooling of one parallel system, the number of parallel systems through which the cooling fluid circulates and cools, etc.

In the case that the temperature of the cooling fluid flowing into the first parallel system 10 from the inlet 1 is referred to as a first temperature, the temperature of the cooling fluid flowing out of the first parallel system 10 and flowing into the second parallel system 20 is referred to as a second temperature, and the temperature of the cooling fluid flowing out of the second parallel system 20 and flowing into the third parallel system 30 is referred to as a third temperature, the second temperature may be higher than the first temperature, and the third temperature may be higher than the second temperature.

In this case, the difference in the flow rate of the cooling fluid flowing into each battery module of the first parallel system 10 and the flow rate of the cooling fluid flowing into each battery module of the second parallel system 20 may be adjusted in proportion to the difference between the first temperature and the second temperature, and the difference between the flow rate of the cooling fluid flowing into each battery module of the second parallel system 20 and the flow rate of the cooling fluid flowing into each battery module of the third parallel system 30 may be adjusted in proportion to the difference between the second temperature and the third temperature. At this time, proportional to the temperature difference does not simply mean proportionality of integer multiples, but includes both linear and nonlinear relationships, and can be interpreted to mean that the flow rate of the cooling fluid may be adjusted correspondingly according to the temperature difference.

As shown in FIG. 2, in order to appropriately control the flow rate or velocity of the cooling fluid flowing between the first parallel system 10, the second parallel system 20, and the third parallel system 30 of the cooling system as shown in FIG. 1, the arrangement structure of the battery modules may be appropriately changed to suit the applied device.

That is, even if the battery modules are arranged in two rows as shown in FIG. 2, by determining individual battery modules corresponding to the first parallel system 10, the second parallel system 20, and the third parallel system 30, and connecting the supply pipes through which the cooling fluid flows into the corresponding battery modules in parallel with the individual battery modules, the cooling system according to one embodiment of the present disclosure may be implemented even in various combination structures of battery modules.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible.

## Claims

1. A battery module cooling system comprising:
an inlet (1) configured to allow a cooling fluid to be introduced;
a first parallel system (10) configured by fluidly connecting n battery modules (11, 12, 13, 14, 15) in parallel, wherein the fluid connection of the n battery modules (11, 12, 13, 14, 15) is configured to allow the cooling fluid introduced from the inlet to be supplied to the n battery modules (11, 12, 13, 14, 15);
a second parallel system (20) configured by fluidly connecting *m* battery modules (21, 22) in parallel, with *m* being a number less than *n,* wherein the fluid connection of the *m* battery modules (21, 22) is configured to allow the cooling fluid flowing out from the first parallel system (10) to be supplied to the *m* battery modules (21, 22);
a third parallel system (30) (i) having a single battery module (31), with *m* being a number more than 1, or (ii) configured by fluidly connecting s battery modules in parallel, with s being a number less than *m,* wherein in case (i) the single battery module (31) is fluidly connected to the second parallel system (20) to allow the cooling fluid flowing out from the second parallel system (20) to be supplied to the single battery module (31), or wherein in case (ii) the fluid connection of the s battery modules is configured to allow the cooling fluid flowing out from the second parallel system (20) to be supplied to the s battery modules; and
an outlet (2) configured to allow the cooling fluid that has passed through the third parallel system (30) to flow out through the outlet (2).

2. The battery module cooling system of claim 1, wherein system is configured
to supply the cooling fluid evenly to each of the n battery modules (11, 12, 13, 14, 15) of the first parallel system (10), and
to supply the cooling fluid that has passed through the first parallel system (10) evenly to each of the *m* battery modules (21, 22) of the second parallel system (20), and then
to supply the cooling fluid that has passed through the second parallel system (20) to the single battery module (31) in case of (i) or evenly to each of the s battery modules of the third parallel system (30) in case of (ii).

3. The battery module cooling system of claim 1 or 2, wherein a total flow rate of cooling fluid passing through the n battery modules (11, 12, 13, 14, 15) of the first parallel system (10), a total flow rate of cooling fluid passing through m battery modules (21, 22) of the second parallel system (20), and a total flow rate of cooling fluid passing through the single battery module (31) or the s battery modules of the third parallel system (30) are all the same.

4. The battery module cooling system of any one of the preceding claims, wherein a flow rate of a cooling fluid passing through at least one or each of the *m* battery modules (21, 22) of the second parallel system (20) is 2 to 3 times greater than a flow rate of a cooling fluid passing through at least one or each of the n battery modules (11, 12, 13, 14, 15) of the first parallel system (10).

5. The battery module cooling system of any one of the preceding claims, wherein a flow rate of a cooling fluid passing through the single battery module (31) or at least one or each of the s battery modules of the third parallel system (30) is 2 to 3 times greater than a flow rate of a cooling fluid passing through at least one or each of the *m* battery modules (21, 22) of the second parallel system (20).

6. The battery module cooling system of any one of the preceding claims, wherein a velocity of a cooling fluid passing through at least one or each of the *m* battery modules (21, 22) of the second parallel system (20) is 2 to 3 times greater than a velocity of a cooling fluid passing through at least one or each of the n battery modules (11, 12, 13, 14, 15) of the first parallel system (10).

7. The battery module cooling system of any one of the preceding claims, wherein a velocity of a cooling fluid passing through the single battery module (31) or at least one or each of the s battery modules of the third parallel system (30) is 2 to 3 times greater than a velocity of a cooling fluid passing through at least one or each of the *m* battery modules (21, 22) of the second parallel system (20).

8. The battery module cooling system of any one of the preceding claims, wherein in case that a temperature of the cooling fluid flowing into the first parallel system (10) from the inlet (1) is referred to as a first temperature, a temperature of the cooling fluid flowing out of the first parallel system (10) and flowing into the second parallel system (20) is referred to as a second temperature, and a temperature of the cooling fluid flowing out of the second parallel system (20) and flowing into the third parallel system (30) is referred to as a third temperature, the second temperature is higher than the first temperature, and the third temperature is higher than the second temperature,
wherein the system is configured
to adjust a difference in a flow rate of cooling fluid flowing into each of the n battery modules (11, 12, 13, 14, 15) of the first parallel system (10) and a flow rate of cooling fluid flowing into each of the *m* battery modules (21, 22) of the second parallel system (20) in proportion to a difference between the first temperature and the second temperature, and
to adjust a difference between a flow rate of cooling fluid flowing into each of the *m* battery modules (21, 22) of the second parallel system (20) and a flow rate of cooling fluid flowing into the single battery module (31) in case of (i) or each of the s battery modules of the third parallel system (30) in case of (ii) in proportion to a difference between the second temperature and the third temperature.

9. The battery module cooling system of any one of the preceding claims, wherein n, the number of battery modules (11, 12, 13, 14, 15) of the first parallel system (10), is at least twice *m,* the number of battery modules (21, 22) of the second parallel system (20), and
*m,* the number of battery modules (21, 22) of the second parallel system (20), is at least two with respect to the single battery module (31) of the third parallel system (30) in case of (i), or at least twice s, the number of battery modules connected in parallel of the third parallel system (30) in case of (ii).

10. A vehicle comprising a battery module cooling system according to any one of the claims 1 to 9, wherein the vehicle is an electric vehicle or a hybrid vehicle.

11. A method for controlling a circulation path and a circulation flow rate flowing through a plurality of battery modules (11, 12, 13, 14, 15; 21, 22; 31) comprised in a battery module cooling system, wherein the battery modules (11, 12, 13, 14, 15; 21, 22; 31) in the battery module cooling system are arranged in parallel systems (10, 20, 30), with each parallel system (10, 20, 30) comprising the at least one battery module or a plurality of battery modules (11, 12, 13, 14, 15; 21, 22; 31) respectively arranged in each parallel system (10, 20, 30) are fluidly connected in parallel, and wherein the number of battery modules (11, 12, 13, 14, 15; 21, 22; 31) decreases from an upstream parallel system (10, 20) to a subsequent downstream parallel system (20, 30) with respect to the direction of a cooling fluid flow from an inlet (1) of the battery module cooling system to an outlet (2) of the battery module cooling system,
wherein the method comprises controlling the flow rate of the cooling fluid to pass through each of the battery modules (21, 22, 31) of the subsequent downstream parallel system (20, 30) in accordance with one or more of the following conditions:
(a) in accordance with the number of parallel systems (10, 20, 30) through which the cooling fluid circulates and cools;
(b) in accordance with the number of the plurality of battery modules (11, 12, 13, 14, 15; 21, 22; 31) present in the upstream parallel system (10, 20, 30); and/or
(c) in accordance with a temperature increase of the cooling fluid caused by passing through the respective upstream parallel system (10, 20, 30).

12. The method according to claim 11, wherein the flow rate of the cooling fluid passing through the at least one of battery modules of the downstream parallel system is 2 to 3 times greater than the flow rate of the cooling fluid passing through the at least one of battery modules of the respectively upstream parallel system.

13. The method according to claim 11 or 12, wherein the method further comprises controlling the cooling fluid to be supplied evenly to each of the downstream parallel systems (10,20,30).

14. The method according to any one of claims 11 to 13 for controlling the circulation path and the circulation flow rate of the battery module cooling system according to any one of claims 1 to 9, or for controlling the battery module cooling system in a vehicle according to claim 10.
